# EUROPÄISCHE PATENTSCHRIFT

(11) **EP 1 531 239 B1**
(45) Veröffentlichungstag und Bekanntmachung des Hinweises auf die Patenterteilung: **23.12.2009**
(21) Anmeldenummer: 04023846.1
(22) Anmeldetag: 06.10.2004
(51) Int. Cl.: F01L 1/02, F01L 1/46

(54) **Montagevorrichtung für einen Zugmitteltrieb und Verfahren zu seinem Montieren**
Mounting arrangement for flexible drive and assembly method
Dispositif de montage pour entraînement flexible et procédé de montage

(30) Priorität: 17.11.2003 DE 10353643
(43) Veröffentlichungstag der Anmeldung: 18.05.2005
(73) Patentinhaber: Joh. Winklhofer & Soehne GmbH und Co. KG, 81369 München (DE); Bayerische Motoren Werke Aktiengesellschaft, 80809 München (DE); Peugeot Citroën Automobiles Société Anonyme, 78140 Velizy Villacoublay (FR)
(72) Erfinder: Halmanseger, Leonhard, 83059 Kolbermoor (DE); Ketterl, Sandra, 85452 Neufinsing (DE); Weikert, Michael, 85464 Neufinsing (DE)
(74) Vertreter: Grünecker, Kinkeldey, Stockmair & Schwanhäusser Anwaltssozietät

(56) Entgegenhaltungen:
- EP-A- 0 793 002
- DE-A- 4 025 126
- DE-U- 20 207 186
- US-A- 3 920 219

## Beschreibung

Die Erfindung betrifft eine entnehmbare Montagevorrichtung für die Montage eines mit einem Zugmittel, wie einer Kette oder einem Zahnriemen versehenen Zugmitteltriebs, wie eines Steuerkettentriebs oder eines Hilfsaggregatantriebs, an einer Verbrennungskraftmaschine, wobei die Montagevorrichtung ein Positionierelement mit Befestigungsmitteln, an denen wenigstens ein Triebrad und/oder wenigstens ein Schienenelement an ihrer jeweiligen Montageposition lösbar anbringbar sind, und eine Montagehandhabe, die von Hand im Wesentlichen ergonomisch greifbar ausgestaltet ist, umfasst.

Montagevorrichtungen der genannten Art sind aus dem Stand der Technik bekannt. Sie werden insbesondere zur Montage von Zugmitteltrieben in einem schwer zugänglichen, für den Zugmittelbetrieb ausgebildeten Schacht eines Verbrennungsmotors verwendet.

In der Vergangenheit wurden Zugmitteltriebe, wie z.B. Steuerkettentriebe oder Hilfsaggregatantriebe, offen an den Verbrennungskraftmaschinen und insbesondere an den Verbrennungsmotoren angebracht. Nach der Montage wurde der Zugmitteltrieb durch einen Deckel abgedeckt und abgedichtet. Um die Anzahl der Dichtflächen und die der Einzelteile des Verbrennungsmotors zu reduzieren, ist man bei heutigen Motorkonstruktionen dazu übergegangen am Motorblock einen zu den Seiten geschlossenen Schacht auszugestalten, in dem sich der Zugmitteltrieb befindet und der nur eine obere und eine untere Öffnung hat. Dies hat den Vorteil, dass der Zugmitteltrieb keine zusätzliche Abdeckung durch einen Deckel mit zusätzlichen Dichtflächen benötigt. Der Schacht des Motorblocks, in dem der Zugmitteltrieb angebracht ist, wird oben durch den Zylinderkopfdeckel und unten durch die Ölwanne abgedichtet. Somit sind keine zusätzlichen Dichtflächen für den Zugmitteltrieb erforderlich, was zu weniger Montageaufwand, weniger Einzelteilen und weniger Leckagemöglichkeiten der Verbrennungskraftmaschine führt.

Allerdings ist bei dem am Motorblock integrierten Zugmittelschacht die Zugänglichkeit für die Montage des Zugmitteltriebs stark eingeschränkt, weil der Schacht nur durch die obere oder die untere Schachtöffnung am Motorblock zugänglich ist. Um dennoch den Zugmitteltrieb möglichst einfach und zeitsparend an dem Verbrennungsmotor montieren zu können, werden Montagehilfen eingesetzt.

So ist z.B. in der DE 296 11 059 U1 eine Montagevorrichtung beschrieben, bei der die Teile eines Nockenwellenkettentriebes auf einer Montageplatte befestigt werden. Nach der erfolgten Montage des Kettentriebs an dem Verbrennungsmotor wird die Montageplatte nach unten aus dem Zugmittelschacht des Motors entnommen.

Nachteilig bei der Montagevorrichtung der DE 296 11 059 U1 ist das aufwendige Anbringen der Teile des Nockenwellenkettentriebs an der Montagevorrichtung.

Eine andere Montagevorrichtung, die den nächstliegenden Stand der Technik darstellt, ist in der DE 40 25 126 A1 beschreiben. Die Elemente eines Nockenwellenantriebes werden hierbei auf einem Montageträger mit federnden Haltern vormontiert. Nach der Montage des Nockenwellenantriebs an der Verbrennungskraftmaschine wird die Montagevorrichtung nach oben abgezogen. Dabei wird die Montagevorrichtung an einer Montagehandhabe von Hand gegriffen.

Die Montagevorrichtung der DE 40 25 126 A1 hat den Nachteil, dass das Anbringen der Teile des Nockenwellenantriebs an den federnden Haltern des Montageträgers zeit- bzw. kraftaufwendig ist.

Der vorliegenden Erfindung liegt daher die Aufgabe zugrunde, eine einfach handhabbare Montagevorrichtung zu schaffen, bei der die Teile des Zugmitteltriebs einfacher anbringbar sind und bei der sich dadurch die erforderliche Montagezeit des Zugmitteltriebs verkürzt.

Diese Aufgabe wird erfindungsgemäß dadurch gelöst, dass die Montagevorrichtung einen mit dem Positionierelement verbundenen Spannkopf umfasst, mittels welchem das Zugmittel aufspannbar ist.

Diese Lösung ist konstruktiv einfach und die Teile des Zugmitteltriebs und besonders das Zugmittel können an einer derart ausgeführten Montagevorrichtung schnell und einfach angebracht werden.

Bei der erfindungsgemäßen Montagevorrichtung wird das Zugmittel durch das Aufspannen mittels des Spannkopfes gehalten und nicht, wie z.B. bei den Montagevorrichtungen der DE 296 11 059 U1 oder der DE 40 25 126 A1, durch ein oder zwei Triebräder, die an einer jeweils fixen Position an der Montagevorrichtung angebracht sind. Das Anbringen eines oder mehrerer Triebräder an die Montagevorrichtung im Bereich des Spannkopfes kann daher bei der vorliegenden Erfindung entfallen.

Außerdem kann das Zugmittel bei der erfindungsgemäßen Lösung besonders schnell an der Montagevorrichtung angebracht werden, weil das Aufspannen des Zugmittels mit dem Spannkopf schnell und einfach durchführbar ist. Hierdurch verkürzt sich die Montagezeit, die zum Vormontieren des Zugmitteltriebs an der Montagevorrichtung nötig ist.

Durch das erfindungsgemäße Aufspannen des Zugmittels an der Montagevorrichtung werden Fertigungstoleranzen des Zugmittels oder Montagevorrichtung automatisch ausgeglichen und das Zugmittel wird spielfrei von der Montagevorrichtung gehalten.

Die erfindungsgemäße Montagevorrichtung kann durch verschiedene, voneinander unabhängige, jeweils für sich vorteilhafte Ausgestaltungen weiterentwickelt werden. Auf diese Ausgestaltungen und die mit den Ausgestaltungen jeweils verbundenen Vorteile wird im Folgenden kurz eingegangen.

So kann die Montagehandhabe in einer vorteilhaften Weiterbildung in dem Spannkopf integriert sein. Dies ist vorteilhaft, weil die Anzahl der Einzelteile der Montagevorrichtung reduziert wird, und dadurch die Herstellkosten der erfindungsgemäßen Montagevorrichtung niedrig sind. Ferner kann die Montagehandhabe in einer weiteren Ausgestaltung in einem vom Zugmittel umschlossenen Bereich angeordnet sein. Dies hat den Vorteil, dass kein zusätzlicher Platz für die Montagehandhabe benötigt wird, was zu einer platzsparenden Montagevorrichtung beiträgt. Hierdurch ist die Montagevorrichtung gut handhabbar und auch für die Montage des Zugmitteltriebs in beengter Umgebung geeignet.

Um das Aufspannen des Zugmittels an der Montagevorrichtung mit dem Spannkopf zu vereinfachen, kann zwischen dem Positionierelement und dem Spannkopf ein Spannkraft erzeugendes Federelement angeordnet sein und können das Positionierelement und der Spannkopf durch die Spannkraft auseinander gedrückt werden. Die erzeugte Spannkraft kann außerdem das vom Zugmittel umschlossene Triebrad in seiner Montageposition an dem Positionierelement halten, ohne dass ein Befestigungsmittel an dem Positionierelement nötig ist. Hierdurch kann die Montagevorrichtung nach der Montage des Triebrades an der Verbrennungskraftmaschine leichter und schneller entnommen werden.

In einer weiteren vorteilhaften Ausgestaltung kann die Montagehandhabe an der Montageposition eines nachträglich zu montierenden Triebrades angeordnet sein. Dies hat den Vorteil, dass das nachträglich zu montierende Triebrad in die Öffnung der Montagehandhabe eingesetzt werden kann bevor die Montagevorrichtung entnommen wird. Beim Entnehmen der Montagevorrichtung rutscht das Zugmittel von dem Spannkopf auf das nachträglich montierte Triebrad.

Um die erfindungsgemäße Montagevorrichtung material- und gewichtssparend auszubilden, kann die Montagevorrichtung zwischen dem Positionierelement und dem Spannkopf stangenförmig ausgestaltet sein.

Ferner kann die Länge der Montagevorrichtung in einer vorteilhaften Weiterbildung veränderbar ausgestaltet sein, wobei die Längenänderung auf einen vorbestimmten Längenbereich begrenzbar ist. Hierdurch können Fertigungstoleranzen des Zugmittels und der Montagevorrichtung ausgeglichen werden und kann die Montagevorrichtung beispielsweise auch für unterschiedliche Zugmitteltriebe verwendet werden.

In einer weiteren vorteilhaften Ausgestaltung kann die Montagevorrichtung zwischen dem Positionierelement und dem Spannkopf als eine längenveränderbare Teleskopstange, mit mindestens zwei ineinandersteckbaren Teleskopstangenelementen, ausgeführt sein. Die Teleskopstange hat den Vorteil, dass sie in ihrer Länge veränderbar, materialund gewichtssparend und trotzdem stabil ist.

Um die Spannkraft mit kostengünstigen und einfachen Mitteln zu erzeugen, kann das die Spannkraft erzeugende Federelement eine Druckfeder umfassen. Ferner kann das Federelement in einer weiteren vorteilhaften Ausgestaltung auch einen Pneumatikzylinder mit einem Luftpolster umfassen. Durch eine Luftfederung in dem Pneumatikzylinder steigt die aufgebrachte Spannkraft mit zunehmender Längenänderung an.

Um die Teile des Zugmitteltriebs einfach an der Montagevorrichtung anbringen und ablösen zu können, können die Befestigungsmittel des Positionierelements als Rastmittel ausgeführt sein, mit denen das wenigstens eine Triebrad und/oder das wenigstens eine Schienenelement an ihrer jeweiligen Montageposition lösbar am Positionierelement verrastbar sind.

Um eine stabile Anordnung des Zugmittels und des Triebrades an der Montagevorrichtung zu gewährleisten, kann das Positionierelement ein Positioniermittel aufweisen, mit dem das wenigstens eine Triebrad in seiner Montageposition radial und/oder axial fixierbar ist. Das Positioniermittel kann kreissegmentförmig ausgestaltet sein, um das Triebrad radial zu der Montagevorrichtung zu stabilisieren. Des Weiteren kann das Positioniermittel des Positionierelementes stufenförmig ausgeführt sein, um sich gleichzeitig an unterschiedlichen Durchmessern des Triebrades anlegen zu können und so auch eine axiale Stabilisierung des Triebrades an dem Positioniermittel des Positionierelementes zu erreichen.

In einer weiteren vorteilhaften Ausgestaltung kann Montagevorrichtung ein von Hand betätigbares Abstreifmittel umfassen, das eine auf das Zugmittel einwirkende Kraft erzeugt, durch die das Zugmittel von der Montagevorrichtung abstreifbar ist. Dies hat den Vorteil, dass das Zugmittel zur Entnahme der Montagevorrichtung auf einfache Weise von der Montagevorrichtung gelöst werden kann. Das Abstreifmittel kann ferner als Hebel ausgeführt sein, um die aufzuwendende Kraft zum Abstreifen des Zugmittels zu reduzieren.

Um die Montagevorrichtung möglichst kompakt und platzsparend auszuführen, kann das Abstreifmittel in dem Spannkopf integriert sein. Ferner kann das Abstreifmittel mit dem Spannkopf schwenkbar verbunden sein, wobei die Schwenkachse im Wesentlichen rechtwinklig zur Längsachse der Montagevorrichtung verläuft. Dies hat den Vorteil, dass das Abstreifmittel unverlierbar mit der Montagevorrichtung verbunden ist. Dadurch, dass die Schwenkachse im Wesentlichen rechtwinklig zur Längsachse der Montagevorrichtung verläuft, kann das Abstreifmittel von einer Hand betätigt werden, die gleichzeitig die Montagevorrichtung an der Montagehandhabe greift. Da hierdurch nur eine Hand zum Gebrauch der Montagevorrichtung benutzt werden muss, kann die zweite Hand für andere Tätigkeiten benutzt werden. Das Abstreifmittel der Montagevorrichtung schwenkt von einer Montageposition, in der das Zugmittel an der Montagevorrichtung angebracht ist, in eine Entnahmeposition, in der das Zugmittel von der Montagevorrichtung abgestreift und die Montagevorrichtung entnehmbar ist.

Um ein unbeabsichtigtes Betätigen des Abstreifmitteles zu verhindern, kann das Abstreifmittel durch das gespannte Zugmittel in seiner Montageposition haltbar sein. Ein ungewolltes selbständiges Betätigen des Abstreifmittels und damit ein unbeabsichtigtes Ablösen des Zugmittels von der Montagevorrichtung kann hierdurch verhindert werden, da eine Kraft bzw. ein Moment an dem Abstreifmittel aufgebracht werden muss, um es aus der Montageposition zu bewegen und dadurch zu betätigen.

In einer weiteren vorteilhaften Ausführungsform kann das Spannkopf zwei im Wesentlichen rechtwinklig zueinander angeordnete Anlageflächen für das Zugmittel aufweisen. Dies hat den Vorteil, dass das Zugmittel durch zwei Anlageflächen geführt wird und dadurch einem unbeabsichtigten Abrutschen des Zugmittels von dem Spannkopf entgegengewirkt wird.

Ferner kann das Abstreifmittel eine Zugmittelaufnahme aufweisen, welche das Zugmittel in der Montageposition im wesentlichen unverschieblich quer zur Zuführrichtung hält, wodurch ein unbeabsichtigtes Abrutschen des Zugmittels von der Montagevorrichtung in der Montageposition verhindert wird.

In einer vorteilhaften Weiterbildung kann der Spannkopf wenigstens ein weiteres Befestigungsmittel aufweisen, an dem wenigstens ein weiteres Triebrad lösbar an dem Spannkopf anbringbar ist. Dies hat den Vorteil, dass das weitere Triebrad an dem Spannkopf anbringbar ist und dadurch das Zugmittel um das weitere Triebrad herumgelegt und gespannt werden kann. Hierdurch ist auch das weitere Triebrad mit Hilfe der Montagevorrichtung an der Verbrennungskraftmaschine montierbar.

Die Erfindung betrifft neben der oben erläuterten Montagevorrichtung und ihren weiteren Ausgestaltungen auch ein Verfahren zum Montieren eines mit einem Zugmittel, wie einer Kette oder einem Zahnriemen versehenen Zugmitteltriebs, wie einem Steuerkettentrieb oder einem Hilfsaggregatantrieb, an eine Verbrennungskraftmaschine mit Hilfe einer Montagevorrichtung. Um eine einfache und schnelle Montage des Zugmitteltriebs an der Verbrennungskraftmaschine zu erreichen, ist erfindungsgemäß vorgesehen, dass bei dem Verfahren wenigstens ein Triebrad in seiner Montageposition an einem Positionierelement lösbar angebracht, ein Zugmittel an seiner Montagevorrichtung durch Spannen des Zugmittels zwischen einem Spannkopf und dem Positionierelement befestigt, wenigstens ein Schienenelement in seiner Montageposition an Befestigungsmitteln des Positionierelementes lösbar angebracht wird, das Zugmittel, das wenigstens eine Triebrad und das wenigstens eine Schienenelement an der Verbrennungskraftmaschine montiert werden, das Zugmittel, das wenigstens eine Triebrad und das wenigstens eine Schienelementes von der Montagevorrichtung gelöst wird und die Montagevorrichtung an einer Montagehandhabe entnommen wird.

Um das Lösen des Zugmittels zu vereinfachen, kann ein Abstreifmittel von Hand zum Abstreifen des Zugmittels von der Montagevorrichtung vor dem Entnehmen der Montagevorrichtung betätigt werden.

In einer vorteilhaften Weiterbildung kann die Montagevorrichtung der Verbrennungskraftmaschine mittels der Montagehandhabe vor dem Montieren zugeführt werden. Hierdurch ist die Montagevorrichtung einfach handhabbar. Ferner kann die Montagevorrichtung in einer zur Entnahmerichtung parallelen Zuführrichtung der Verbrennungskraftmaschine zugeführt werden. Dies hat den Vorteil, dass die erfindungsgemäße Montagevorrichtung beispielsweise entweder von oben oder von unten in dem Triebmittelschacht der Verbrennungskraftmaschine zugeführt werden kann, wodurch eine größere Flexibilität bei der Montage des Zugmitteltriebs gegeben ist.

Um den Zugmitteltrieb an der Verbrennungskraftmaschine zu vervollständigen, kann wenigstens ein weiteres Triebrad anstelle der Montagevorrichtung nach dem Entnehmen der Montagevorrichtung eingesetzt werden. Vor dem Einsetzen des weiteren Triebrades kann das Zugmittel beispielsweise mit Hilfe eines Hilfswerkzeuges, das ein Runterfallen des Zugmittels nach seinem Lösen von der Montagevorrichtung verhindert, gehalten werden.

Im Folgenden wird die Erfindung beispielhaft mit Bezug auf die beigefügten Zeichnungen erläutert. Die unterschiedlichen Merkmale können dabei unabhängig voneinander kombiniert werden, wie dies oben bei den einzelnen vorteilhaften Ausgestaltungen bereits dargelegt wurde.

Es zeigen:
- Fig. 1: eine Ausführungsform der erfindungsgemäßen Montagevorrichtung schematisch in einer perspektivischen Ansicht;
- Fig. 2: eine Schnittdarstellung eines Details aus Fig. 1 schematisch in einer Seitenansicht von links;
- Fig. 3: eine Ausführungsform der erfindungsgemäßen Montagevorrichtung mit einem daran angebrachten Zugmittel, einem Triebrad und zwei Schienenelementen eines Zugmitteltriebs schematisch in einer perspektivischen Ansicht von unten;

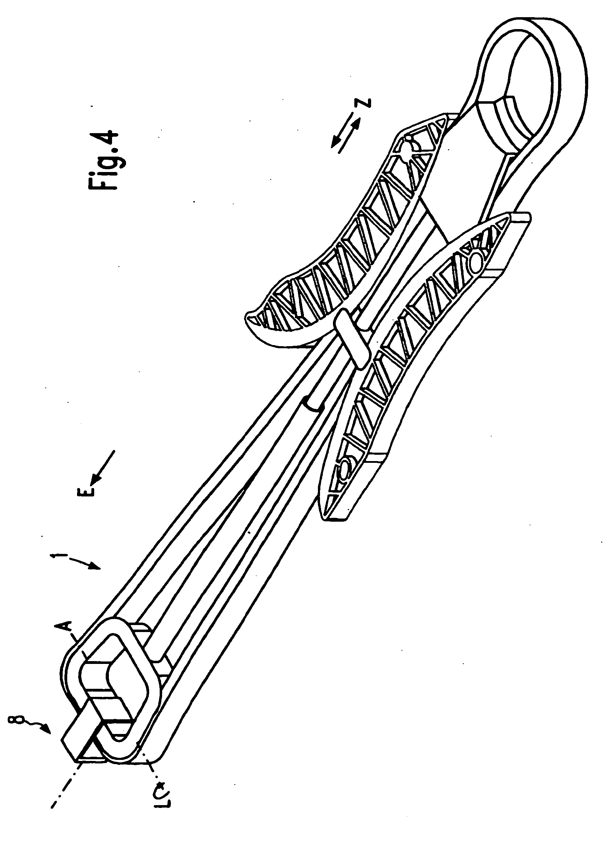

- Fig. 4: die Ausführungsform der Montagevorrichtung aus Fig. 3 ohne Triebrad schematisch in einer perspektivischen Ansicht von oben;

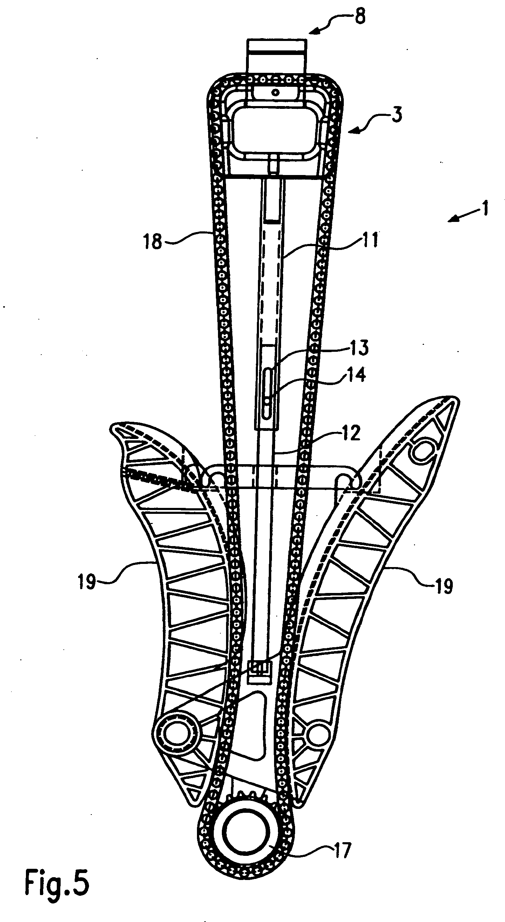

- Fig. 5: eine Ausführungsform der Montagevorrichtung mit einem angebrachten Zugmittel, Triebrad und zwei Schienenelementen schematisch in einer Draufsicht.

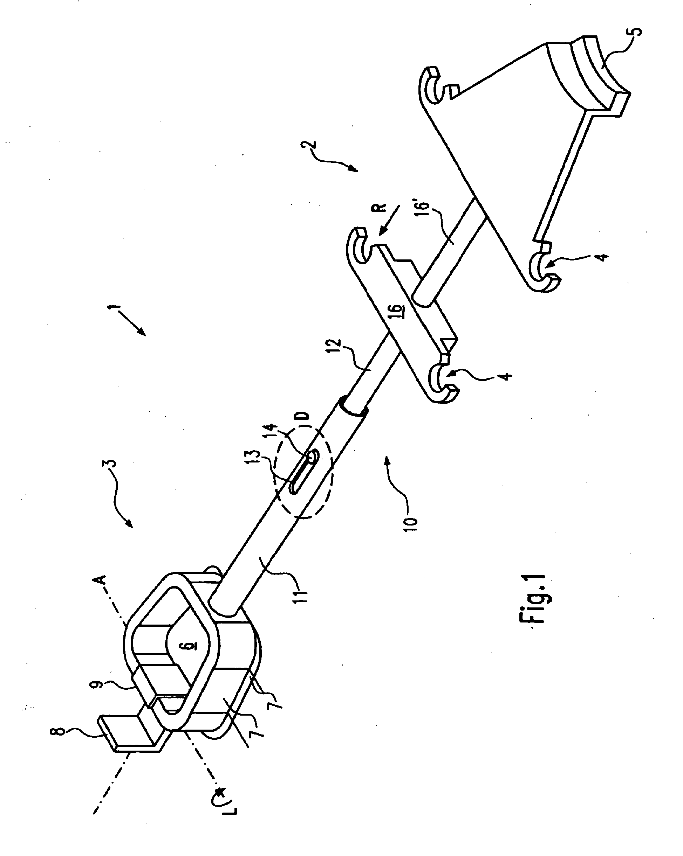

Fig. 1 zeigt eine beispielhafte Ausführungsform der erfindungsgemäßen Montagevorrichtung 1 mit einem Positionierelement 2 und einem Spannkopf 3. An der Montagevorrichtung 1 in Fig. 1 sind noch keine Teile eines Zugmitteltriebs angeordnet.

Das Positionierelement 2, das zum Positionieren von bestimmten Teilen des Zugmitteltriebs ausgestaltet ist, weist zwei als Rasten ausgestaltete Befestigungsmittel 4 und ein kreissegment- und stufenförmiges Positioniermittel 5 auf.

Der Spannkopf 3 umfasst eine integrierte Montagehandhabe 6, an der die Montagevorrichtung 1 von Hand im Wesentlichen ergonomisch greifbar ist. Um den Spannkopf 3 herum laufen zwei im Wesentlichen rechtwinklig zueinander angeordnete Anlageflächen 7, an die sich ein Zugmittel anlegen kann. An der oberen Seite des Spannkopfes 3 ist ein Abstreifmittel 8 zum Ablösen des Zugmittels angeordnet. Das Abstreifmittel 8 ist in dem oberen Teil des Spannkopfs 3 integriert und ist um eine Achse A, relativ zum Spannkopf 3, schwenkbar. Die in Fig. 1 dargestellte Stellung des Abstreifmittels 8 relativ zu dem Spannkopf 3 ist seine Montageposition. In der Montageposition können an der Montagevorrichtung 1 angebrachte Teile des Zugmitteltriebs an der Verbrennungskraftmaschine montiert werden. Das Abstreifmittel 8 steht in seiner in Fig. 1 dargestellten Montageposition über den Spannkopf 3 hinaus. Das Abstreifmittel 8 bildet eine Zugmittelaufnahme 9, die das Zugmittel in der Montageposition halten kann.

Das Positionierelement 2 und der Spannkopf 3 sind durch eine Teleskopstange 10 miteinander verbunden. Die Teleskopstange 10 besteht aus einem ersten Teleskopstangenelement 11 und einem zweiten Teleskopstangenelement 12. Das erste Teleskopstangenelement 11 ist an einer Seite mit dem Spannkopf 3 und das zweite Teleskopstangenelement 12 ist an einer Seite mit dem Positionierelement 2 verbunden. Diese Verbindungen können beispielsweise als Steckverbindungen ausgeführt sein, denkbar sind aber auch Schraub- oder Löt- bzw. Schweißverbindungen. An der jeweils zweiten Seite sind das erste Teleskopstangenelement 11 und das zweite Teleskopstangenelement 12 ineinander gesteckt, wobei das in Fig. 1 beispielhaft dargestellte erste Teleskopstangenelement 11 einen größeren Durchmesser als das zweite Teleskopstangenelement 12 hat. Dies kann auch anders herum ausgeführt sein. Ineinander gesteckt bilden das erste Teleskopstangenelement 11 und das zweite Teleskopstangenelement 12 die längenveränderbare Teleskopstange 10.

Um den Längenänderungsbereich der Teleskopstange 10 zu begrenzen ist das erste Teleskopstangenelement 11 mit einer axial verlaufenden Nut 13 ausgeführt. In der Nut 13 läuft bei den ineinander gesteckten Teleskopstangenelementen 11, 12 ein Stift 14. Der Stift 14 ist in dem zweiten Teleskopstangenelement 12 in eine radiale Bohrung eingesteckt und ragt über den Durchmesser des zweiten Teleskopstangenelementes 12 hinaus. Eine Längenänderung der Teleskopstange 10 ist nur im Bewegungsbereich des Stiftes 14 innerhalb der Nut 13 möglich. Die beiden Teleskopstangenelemente 11 und 12 bilden mit der Nut 13 und dem Stift 14 eine Linearführung, die auch gleichzeitig eine Verdrehsicherung der Montagevorrichtung 1 darstellt. Um die Führungseigenschaften zu verstärken, kann die Nut 13 diametral in dem ersten Teleskopstangenelement 11 ausgeführt sein und der Stift 14 beidseitig aus dem zweiten Teleskopstangenelement 12 hervorstehen. Hierdurch wird eine doppelte Linearführung ausgebildet.

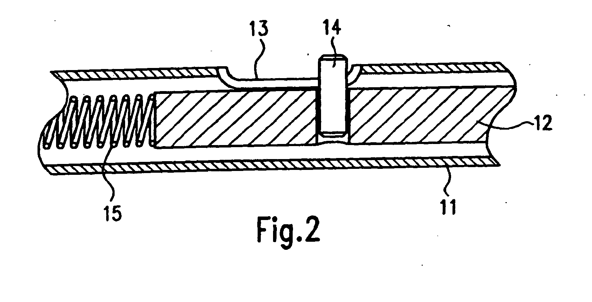

Fig. 2 zeigt eine Schnittdarstellung des Details D aus Fig. 1 in einer Seitenansicht von links. Wie in Fig. 2 dargestellt, ist im Inneren des ersten Teleskopstangenelements 11 eine Druckfeder 15 angeordnet, die gegen das Ende des zweiten Teleskopstangenelements 12 drückt. Durch die Druckfeder 15 wird die Teleskopstange 10 auseinander gedrückt. Dadurch werden das Positionierelement 2 und der Spannkopf 3 ebenfalls auseinander gedrückt, jedoch maximal bis der Stift 14 an der einen Seite der Nut 13, wie in Fig. 1 und 2 dargestellt, anschlägt.

Das Positionierelement 3 der in Fig. 1 beispielhaft dargestellten Montagevorrichtung 1 umfasst einen oberen Teil 16, der von dem übrigen Teil des Positionierelements 3 durch einen Stangenabschnitt 16' beabstandet ist. Durch die Ausführung des Stangeabschnitts 16' kann Material und damit sowohl Gewicht als auch Kosten eingespart werden. Alternativ kann das Positionierelement 3 auch ohne den Stangenabschnitt 16', z.B. durchgehend plattenförmig, ausgeführt werden.

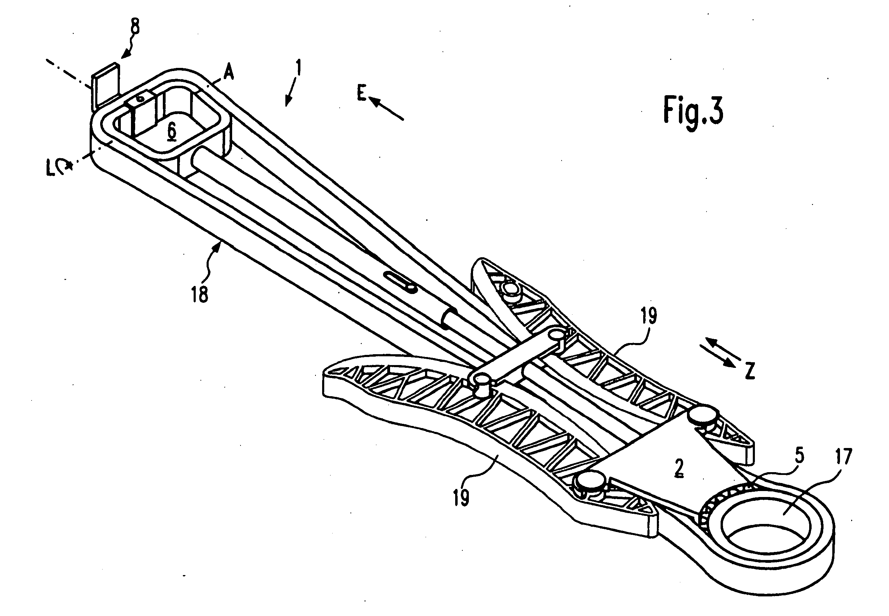

Fig. 3 zeigt die beispielhafte Ausführungsform der erfindungsgemäßen Montagevorrichtung aus Fig. 1 mit daran angebrachten Teilen des Zugmitteltriebs, wie z.B. einem Steuerkettentrieb oder einem Hilfsaggregatantrieb, zur Montage an einer Verbrennungskraftmaschine.

Ein Triebrad 17, das beispielsweise ein Kurbelwellenkettenrad eines Verbrennungsmotors ist, ist an dem Positioniermittel 5 des Positionierelementes 2 angebracht. Das Triebrad 17 wird durch ein Zugmittel 18, z.B. eine Steuerkette, umschlossen. Das Zugmittel 18 ist zwischen dem Spannkopf 3 und dem Positionierelement 2 über das Triebrad 17 eingespannt. Die in Fig. 2 dargestellte Druckfeder 15 im Inneren des ersten Teleskopstangenelements 11 drückt das Positionierelement 2 und den Spannkopf 3 auseinander, wodurch das Zugmittel 18 gespannt wird.

An dem Positionierelement 2 sind weiterhin zwei Schienenelemente 19 des Zugmitteltriebs verdrehgesichert angeordnet. Die mit Gegenrasten versehenen Schienenelemente 19 sind in die als Rasten ausgebildeten Befestigungsmittel 4 des Positionierelements 2 eingerastet. Um ein Verdrehen der Schienenelemente 19 relativ zu der Montagevorrichtung 1 zu verhindern, sind wenigstens zwei Befestigungsmittel 4 pro Schienenelement 19 vorgesehen. Die Schienenelemente 19 und das Triebrad 17 sind jeweils in ihrer Montageposition an der Montagevorrichtung 1 angeordnet.

Das aufgespannte Zugmittel 18 wird auf der einen Seite durch das Triebrad 17 und auf der gegenüberliegenden Seite durch den Spannkopf 3 geführt. Hierbei berührt das Zugmittel 18 den Spannkopf 3 an den Anlageflächen 7, durch die es zu zwei Seiten geführt wird. Das Abstreifmittel 8 befindet sich in Fig. 3 in seiner Montageposition. In der Montageposition verhindert die Zugmittelaufnahme 9 des Abstreifmittels 8 ein Herunterrutschen des Zugmittels 18 von dem Spannkopf 3. Das Abstreifmittel 8 ist im Wesentlichen C-förmig um das Zugmittel 18 herum ausgestaltet. Durch die C-förmige Ausgestaltung bildet das Abstreifmittel 8 gleichzeitig einen Handschutz für das Zugmittel 18 aus.

Um das Abstreifmittel 8 zu betätigen und dadurch das Zugmittel 18 von der Montagevorrichtung 1 zu lösen, wird das Abstreifmittel 8 in einer Löserichtung L um eine Achse A geschwenkt. Zum Schwenken des Abstreifmittels 8 bei aufgespanntem Zugmittel 18 muss eine Kraft aufgewendet werden, da beim Schwenken die Montagevorrichtung 1 gegen die von der Druckfeder 15 erzeugte Spannkraft zusammengedrückt werden muss.

Beim weiteren Schwenken des Abstreifmittels 8 in der Löserichtung L wird das Zugmittel 18 durch das Abstreifmittel 8 von dem Spannkopf 3 abgestreift. Sobald das Zugmittel 18 von dem Spannkopf 3 heruntergeschoben ist, drückt die Druckfeder 15 den Spannkopf 3 und das Positionierelement 2 auseinander bis der Stift 14 am Ende der Nut 13, wie in Fig. 1 dargestellt, anschlägt.

Zur Montage des Zugmitteltriebs an einer Verbrennungskraftmaschine, z.B. einem Verbrennungsmotor, wird das Zugmittel 18, das Triebrad 17 und die beiden Schienenelemente 19 in der in Fig. 3 dargestellte Weise an der Montagevorrichtung 1 angebracht. Dabei ist das Zugmittel 18 zwischen dem Spannkopf 3 und dem Positionierelement 2 der Montagevorrichtung 1 eingespannt. Die wie in Fig. 3 bestückte Montagevorrichtung wird einem Verbrennungskraftmaschine (nicht dargestellt) und insbesondere einem Triebmittelschacht des Verbrennungskraftmaschine von oben oder von unten in einer Zuführrichtung Z zugeführt. Die beiden Schienenelemente 19 und das Triebrad 17 werden in ihrer Montageposition an dem Verbrennungskraftmaschine angebracht. Da nach wird das Abstreifmittel 8 der Montagevorrichtung 1 durch ein manuelles Schwenken in der Löserichtung L betätigt. Hierdurch streift sich das Triebmittel 18 von dem Spannkopf 3 ab. Um ein Runterfallen des Zugmittels 18 nach dem Abstreifen zu verhindern, kann das Zugmittel mittels eines Hilfswerkzeugs gehalten werden.

Anschließend kann die an der Montagehandhabe 6 ergriffene Montagevorrichtung 1 nach oben in einer Entnahmerichtung E entnommen werden. Dabei muss eine Lösekraft aufgewendet werden, um die als Rasten ausgebildeten Befestigungsmittel 4, 16 der Montagevorrichtung 1 von den Gegenrasten an den Schienenelementen 19 zu lösen. Zuletzt wird noch wenigstens ein weiteres Triebrad (nicht dargestellt) nach dem Entnehmen der Montagevorrichtung 1 innerhalb des Zugmittels 18 in seiner Montageposition an dem Verbrennungsmotor montiert.

Alternativ kann die Montagevorrichtung 1 derart ausgestaltet sein, dass die Montagehandhabe 6 an der Montageposition des weiteren Triebrades ausgebildet ist und das weitere Triebrad durch die Montagehandhabe 6 hindurch an dem Verbrennungsmotor anbringbar ist. Bei dieser Ausführungsform wird die Montagevorrichtung 1 erst nach dem Einsetzen des weiteren Triebrades entnommen.

Außerdem kann der Spannkopf 3 alternativ auch wenigstens ein weiteres Befestigungsmittel zum Anbringen des wenigstens einen weiteren Triebrades umfassen. Das an dem Spannkopf 3 angebrachte weitere Triebrad kann das Zugmittel 18 aufnehmen und spannt dieses durch den Spannkopf 3. Die derart vormontierte Montagevorrichtung kann der Verbrennungskraftmaschine zugeführt und der Zugmitteltrieb montiert werden.

## Patentansprüche

1. Entnehmbare Montagevorrichtung (1) für die Montage eines mit einem Zugmittel (18), wie einer Kette oder einem Zahnriemen versehenen Zugmitteltriebs, wie eines Steuerkettentriebs oder eines Hilfsaggregatantriebs, an einer Verbrennungskraftmaschine, wobei die Montagevorrichtung (1) ein Positionierelement (2) mit Befestigungsmitteln (4), an denen wenigstens ein Triebrad (17) und/oder wenigstens ein Schienenelement (19) an ihrer jeweiligen Montageposition lösbar anbringbar sind, und eine Montagehandhabe (6), die von Hand im Wesentlichen ergonomisch greifbar ausgestaltet ist, umfasst, **dadurch gekennzeichnet, dass** die Montagevorrichtung (1) einen mit dem Positionierelement (2) verbundenen Spannkopf (3) umfasst, mittels welchem das Zugmittel (18) aufspannbar ist.

2. Montagevorrichtung (1) nach Anspruch 1, **dadurch gekennzeichnet, dass** die Montagehandhabe (6) in dem Spannkopf (3) integriert ist.

3. Montagevorrichtung (1) nach Anspruch 1 oder 2, **dadurch gekennzeichnet, dass** die Montagehandhabe (6) in einem vom Zugmittel (18) umschlossenen Bereich angeordnet ist.

4. Montagevorrichtung (1) nach einem der oben genannten Ansprüche, **dadurch gekennzeichnet, dass** zwischen dem Positionierelement (2) und dem Spannkopf (3) ein Spannkraft erzeugendes Federelement (15) angeordnet ist und dass das Positionierelement (2) und der Spannkopf (3) durch die Spannkraft auseinander gedrückt sind.

5. Montagevorrichtung (1) nach Anspruch 4, **dadurch gekennzeichnet, dass** das Federelement eine Druckfeder (15) umfasst.

6. Montagevorrichtung (1) nach Anspruch 4, **dadurch gekennzeichnet, dass** das Federelement einen Pneumatikzylinder umfasst.

7. Montagevorrichtung (1) nach einem der oben genannten Ansprüche, **dadurch gekennzeichnet, dass** die Montagevorrichtung (1) zwischen dem Positionierelement (2) und dem Spannkopf (3) stangenförmig ausgestaltet ist.

8. Montagevorrichtung (1) nach einem der oben genannten Ansprüche, **dadurch gekennzeichnet, dass** die Länge der Montagevorrichtung (1) veränderbar ausgestaltet ist, wobei die Längenänderung auf einen vorbestimmten Längenbereich begrenzbar ist.

9. Montagevorrichtung (1) nach einem der oben genannten Ansprüche, **dadurch gekennzeichnet, dass** die Montagevorrichtung (1) zwischen dem Positionierelement (2) und dem Spannkopf (3) als eine Teleskopstange (10), mit mindestens zwei ineinandersteckbaren Teleskopstangenelementen (11, 12), ausgeführt ist.

10. Montagevorrichtung (1) nach einem der oben genannten Ansprüche, **dadurch gekennzeichnet, dass** die Befestigungsmittel (4) des Positionierelements (2) als Rastmittel ausgeführt sind, mit denen das wenigstens eine Triebrad (17) und/oder wenigstens eine Schienenelement (19) an ihrer jeweiligen Montageposition lösbar am Positionierelement (2) verrastbar sind.

11. Montagevorrichtung (1) nach einem der oben genannten Ansprüche, **dadurch gekennzeichnet, dass** das Positionierelement (2) ein Positioniermittel (5) aufweist, mit dem das wenigstens eine Triebrad (17) in seiner Montageposition radial und/oder axial fixierbar ist.

12. Montagevorrichtung (1) nach einem der oben genannten Ansprüche, **dadurch gekennzeichnet, dass** die Montagevorrichtung (1) ein von Hand betätigbares Abstreifmittel (8) umfasst, das eine auf das Zugmittel (18) einwirkende Kraft erzeugt, durch die das Zugmittel (18) von der Montagevorrichtung (1) abstreifbar ist.

13. Montagevorrichtung (1) nach Anspruch 12, **dadurch gekennzeichnet, dass** das Abstreifmittel (8) in dem Spannkopf (3) integriert ist.

14. Montagevorrichtung (1) nach Anspruch 12 oder 13, **dadurch, gekennzeichnet, dass** das Abstreifmittel (8) mit dem Spannkopf (3) schwenkbar verbunden ist, wobei eine Schwenkachse (A) im Wesentlichen rechtwinklig zur Längsachse der Montagevorrichtung (1) verläuft.

15. Montagevorrichtung (1) nach einem der Ansprüche 12 bis 14, **dadurch gekennzeichnet, dass** das Abstreifmittel (8) durch das gespannte Zugmittel (18) in seiner Montageposition haltbar ist.

16. Montagevorrichtung (1) nach einem der Ansprüche 12 bis 15, **dadurch gekennzeichnet, dass** das Abstreifmittel (8) eine Zugmittelaufnahme (9) aufweist, welche das Zugmittel (18) in der Montageposition im wesentlichen unverschieblich quer zur Zuführrichtung (Z) hält.

17. Montagevorrichtung (1) nach einem der oben genannten Ansprüche, **dadurch gekennzeichnet, dass** der Spannkopf (3) wenigstens ein weiteres Befestigungsmittel aufweist, an dem wenigstens ein weiteres Triebrad lösbar an dem Spannkopf (3) anbringbar ist.

18. Verfahren zum Montieren eines mit einem Zugmittel (18), wie einer Kette oder einem Zahnriemen versehenen Zugmitteltriebs, wie einem Steuerkettentrieb oder einem Hilfsaggregatantrieb, an einer Verbrennungskraftmaschine mit Hilfe einer Montagevorrichtung (1), umfassend folgende Verfahrensschritte:
- Lösbares Anbringen wenigstens eines Triebrades (17) in seiner Montagepositionen an einem Positionierelement (2) der Montagevorrichtung (1),
- Befestigen des Zugmittels (18) an der Montagevorrichtung (1) durch Spannen des Zugmittels (18) zwischen einem Spannkopf (3) und dem Positionierelement (2) der Montagevorrichtung (1),
- Lösbares Anbringen wenigstens eines Schienenelementes (19) in seiner Montagepositionen an Befestigungsmitteln (4) des Positionierelements (2) der Montagevorrichtung (1),
- Montieren des Zugmittels (18), des wenigstens einen Triebrades (17) und des wenigstens einen Schienelementes (19) an der Verbrennungskraftmaschine,
- Lösen des Zugmittels (18), des wenigstens einen Triebrades (17) und des wenigstens einen Schienelementes (19) von der Montagevorrichtung (1),
- Entnehmen der Montagevorrichtung (1) an einer Montagehandhabe (6).

19. Verfahren nach Anspruch 18, **gekennzeichnet durch** folgenden Verfahrensschritt:
- Betätigen eines Abstreifmittels (8) von Hand zum Abstreifen des Zugmittels (18) von der Montagevorrichtung (1) vor dem Entnehmen der Montagevorrichtung (1).

20. Verfahren nach Anspruch 18 oder 19, **gekennzeichnet durch** folgenden Verfahrensschritt:
- Einsetzen wenigstens eines weiteren Triebrades anstelle der Montagevorrichtung (1) nach dem Entnehmen.

21. Verfahren nach einem der Ansprüche 18 bis 20, **gekennzeichnet durch** folgenden Verfahrensschritt:
- Zuführen der Montagevorrichtung (1) an die Verbrennungskraftmaschine mittels der Montagehandhabe (6) vor dem Montieren.

## Claims

1. Removable mounting device (1) for mounting a traction mechanism, such as a control chain mechanism or an auxiliary assembly drive, provided with a traction means (18), such as a chain or a toothed belt, on an internal combustion engine, the mounting device (1) comprising a positioning element (2) with fastening means (4), on which at least one driving wheel (17) and/or at least one rail element (19) can be attached releasably in their respective mounting position, and a mounting handle (6) which is designed ergonomically to be essentially capable of being gripped by hand, **characterized in that** the mounting device (1) comprises a chucking head (3) which is connected to the positioning element (2) and by means of which the traction means (18) can be tension-fitted.

2. Mounting device (1) according to Claim 1, **characterized in that** the mounting handle (6) is integrated in the chucking head (3).

3. Mounting device (1) according to Claim 1 or 2, **characterized in that** the mounting handle (6) is arranged in a region surrounded by the traction means (18).

4. Mounting device (1) according to one of the above-mentioned claims, **characterized in that** a spring element (15) generating a tension force is arranged between the positioning element (2) and the chucking head (3), and **in that** the positioning element (2) and the chucking head (3) are pressed apart from one another by means of the tension force.

5. Mounting device (1) according to Claim 4, **characterized in that** the spring element comprises a compression spring (15).

6. Mounting device (1) according to Claim 4, **characterized in that** the spring element comprises a pneumatic cylinder.

7. Mounting device (1) according to one of the above-mentioned claims, **characterized in that** the mounting device (1) has between the positioning element (2) and the chucking head (3) a rod-shaped configuration.

8. Mounting device (1) according to one of the above-mentioned claims, **characterized in that** the length of the mounting device (1) is designed to be variable, the length change being limitable to a predetermined length range.

9. Mounting device (1) according to one of the above-mentioned claims, **characterized in that** the mounting device (1) is designed between the positioning element (2) and the chucking head (3) as a telescopic rod (10) with at least two telescopic rod elements (11, 12) insertable one in the other.

10. Mounting device (1) according to one of the above-mentioned claims, **characterized in that** the fastening means (4) of the positioning element (2) are designed as latching means, by which the at least one driving wheel (17) and/or the at least one rail element (19) can be latched releasably to the positioning element (2) in their respective mounting position.

11. Mounting device (1) according to one of the above-mentioned claims, **characterized in that** the positioning element (2) has a positioning means (5), by which the at least one driving wheel (17) can be fixed radially and/or axially in its mounting position.

12. Mounting device (1) according to one of the above-mentioned claims, **characterized in that** the mounting device (1) comprises a manually actuatable strip-off means (8) generating a force which acts on the traction means (18) and by which the traction means (18) can be stripped off from the mounting device (1).

13. Mounting device (1) according to Claim 12, **characterized in that** the strip-off means (8) is integrated in the chucking head (3).

14. Mounting device (1) according to Claim 12 or 13, **characterized in that** the strip-off means (8) is connected pivotably to the chucking head (3), a pivot axis (A) running essentially at right angles with respect to the longitudinal axis of the mounting device (1).

15. Mounting device (1) according to one of Claims 12 to 14, **characterized in that** the strip-off means (8) can be held in its mounting position by the tensioned traction means (18).

16. Mounting device (1) according to one of Claims 12 to 15, **characterized in that** the strip-off means (8) has a traction means receptacle (9) which holds the traction means (18) in the mounting position essentially non-displaceably transversely with respect to the feed direction (Z).

17. Mounting device (1) according to one of the above-mentioned claims, **characterized in that** the chucking head (3) has at least one further fastening means, at which at least one further driving wheel can be attached releasably to the chucking head (3).

18. Method for mounting a traction mechanism, such as a control chain mechanism or auxiliary assembly drive, provided with a traction means (18), such as a chain or a toothed belt, on an internal combustion engine with the aid of a mounting device (1), comprising the following method steps:
- releasable attachment of at least one driving wheel (17) in its mounting position to a positioning element (2) of the mounting device (1),
- fastening of the traction means (18) to the mounting device (1) by means of the tensioning of the traction means (18) between a chucking head (3) and the positioning element (2) of the mounting device (1),
- releasable attachment of at least one rail element (19) in its mounting position to fastening means (4) of the positioning element (2) of the mounting device (1),
- mounting of the traction means (18) of the at least one driving wheel (17) and of the at least one rail element (19) on the internal combustion engine,
- release of the traction means (18), of the at least one driving wheel (17) and of the at least one rail element (19) from the mounting device (1),
- removal of the mounting device (1) by means of a mounting handle (6).

19. Method according to Claim 18, **characterized by** the following method step:
- manual actuation of a strip-off means (8) for stripping off the traction means (18) from the mounting device (1) before the removal of the mounting device (1).

20. Method according to Claim 18 or 19, **characterized by** the following method step:
- insertion of at least one further driving wheel, instead of the mounting device (1), after removal.

21. Method according to one of Claims 18 to 20, **characterized by** the following method step:
- feed of the mounting device (1) to the internal combustion engine by means of the mounting handle (6) before mounting.

## Revendications

1. Dispositif de montage amovible (1) pour le montage d'un mécanisme d'entraînement pourvu d'un moyen d'entraînement (18), tel qu'une chaîne ou une courroie dentée, notamment d'un mécanisme d'entraînement de chaîne de distribution ou d'un mécanisme d'entraînement de groupe auxiliaire, sur une machine à combustion interne, dans lequel le dispositif de montage (1) comprend un élément de positionnement (2) avec des moyens de fixation (4), sur lesquels au moins une roue motrice (17) et/ou au moins un élément de voie (19) peut ou peuvent être installés dans leur position de montage respective de manière amovible, et une poignée de montage (6), qui peut être saisi manuellement de manière sensiblement ergonomique par une main, **caractérisé en ce que** le dispositif de montage (1) comprend une tête de serrage (3) reliée à l'élément de positionnement (2), à l'aide de laquelle tête de serrage le moyen d'entraînement (18) peut être mis en tension.

2. Dispositif de montage (1) selon la revendication 1, **caractérisé en ce que** la poignée de montage (6) est intégrée à la tête de serrage (3).

3. Dispositif de montage (1) selon la revendication 1 ou 2, **caractérisé en ce que** la poignée de montage (6) est aménagée dans une zone entourée par le moyen d'entraînement (18).

4. Dispositif de montage (1) selon l'une quelconque des revendications précédentes, **caractérisé en ce qu'**il est aménagé entre l'élément de positionnement (2) et la tête de serrage (3) un élément à ressort (15) générant une force de serrage et **en ce que** l'élément de positionnement (2) et la tête de serrage (3) sont écartés l'un de l'autre par pression par la force de serrage.

5. Dispositif de montage (1) selon la revendication 4, **caractérisé en ce que** l'élément à ressort comprend un ressort de compression (15).

6. Dispositif de montage (1) selon la revendication 4, **caractérisé en ce que** l'élément à ressort comprend un cylindre pneumatique.

7. Dispositif de montage (1) selon l'une quelconque des revendications précédentes, **caractérisé en ce que** le dispositif de montage (1) est aménagé en forme de barre entre l'élément de positionnement (2) et la tête de serrage (3).

8. Dispositif de montage (1) selon l'une quelconque des revendications précédentes, **caractérisé en ce que** la longueur du dispositif de montage (1) est prévue variable, la variabilité de longueur pouvant être limitée à une plage prédéterminée de longueurs.

9. Dispositif de montage (1) selon l'une quelconque des revendications précédentes, **caractérisé en ce que** le dispositif de montage (1) est réalisé entre l'élément de positionnement (2) et la tête de serrage (3) sous la forme d'une barre télescopique (10) avec au moins deux éléments (11, 12) de la barre télescopique qui sont enfichables l'un dans l'autre.

10. Dispositif de montage (1) selon l'une quelconque des revendications précédentes, **caractérisé en ce que** les moyens de fixation (4) de l'élément de positionnement (2) se présentent sous la forme de moyens d'encliquetage, avec lesquels la au moins une roue motrice (17) et/ou le au moins un élément de voie (19) peut ou peuvent être encliquetés dans leur position de montage respective de manière amovible sur l'élément de positionnement (2).

11. Dispositif de montage (1) selon l'une quelconque des revendications précédentes, **caractérisé en ce que** l'élément de positionnement (2) présente un moyen de positionnement (5) avec lequel là au moins une roue motrice (17) peut être fixée radialement et/ou axialement dans sa position de montage.

12. Dispositif de montage (1) selon l'une quelconque des revendications précédentes, **caractérisé en ce que** le dispositif de montage (1) comprend un moyen de dégagement (8) qui peut être commandé à la main pour générer une force agissant sur le moyen d'entraînement (18) par laquelle le moyen d'entraînement (18) peut être dégagé du dispositif de montage (1).

13. Dispositif de montage (1) selon la revendication 12, **caractérisé en ce que** le moyen de dégagement (8) est intégré à la tête de serrage (3).

14. Dispositif de montage (1) selon la revendication 12 ou 13, **caractérisé en ce que** le moyen de dégagement (8) est relié à pivotement à la tête de serrage (3), un axe pivot (A) s'étendant sensiblement à angle droit avec l'axe longitudinal du dispositif de montage (1).

15. Dispositif de montage (1) selon l'une quelconque des revendications 12 à 14, **caractérisé en ce que** le moyen de dégagement (8) peut être maintenu dans sa position de montage par le moyen d'entraînement mis en tension (18).

16. Dispositif de montage (1) selon l'une quelconque des revendications 12 à 15, **caractérisé en ce que** le moyen de dégagement (8) présente un logement (9) pour le moyen d'entraînement, qui maintient le moyen d'entraînement (18) dans la position de montage de manière sensiblement immobile transversalement à la direction d'alimentation (Z).

17. Dispositif de montage (1) selon l'une quelconque des revendications précédentes, **caractérisé en ce que** la tête de serrage (3) présente au moins un autre moyen de fixation, sur lequel au moins une autre roue motrice peut être montée de manière amovible sur la tête de serrage (3).

18. Procédé de montage d'un mécanisme d'entraînement pourvu d'un moyen d'entraînement (18), tel qu'une chaîne ou une courroie dentée, notamment d'un mécanisme d'entraînement de chaîne de distribution ou d'un mécanisme d'entraînement de groupe auxiliaire, sur une machine à combustion interne, à l'aide d'un dispositif de montage (1), comprenant les étapes suivantes consistant à :
- installer de manière amovible au moins une roue motrice (17) dans sa position de montage sur un élément de positionnement (2) du dispositif de montage (1),
- fixer le moyen d'entraînement (18) sur le dispositif de montage (1) par serrage du moyen d'entraînement (18) entre une tête de serrage (3) et l'élément de positionnement (2) du dispositif de montage (1),
- installer de manière amovible au moins un élément de voie (19) dans sa position de montage sur des moyens de fixation (4) de l'élément de positionnement (2) du dispositif de montage (1),
- monter le moyen d'entraînement (18), la au moins une roue motrice (17) et le au moins un élément de voie (19) sur la machine à combustion interne,
- dégager le moyen d'entraînement (18), la au moins une roue motrice (17) et le au moins un élément de voie (19) du dispositif de montage (1), et
- retirer le dispositif de montage (1) sur une poignée de montage (6).

19. Procédé selon la revendication 18, **caractérisé par** l'étape de procédé suivante consistant à :
- commander un moyen de dégagement (8) à la main pour dégager le moyen d'entraînement (18) du dispositif de montage (1) avant retrait du dispositif de montage (1).

20. Procédé selon la revendication 18 ou 19, **caractérisé par** l'étape de procédé suivante consistant à :
- utiliser au moins une autre roue motrice au lieu du dispositif de montage (1) après le retrait.

21. Procédé selon l'une quelconque des revendications 18 à 20, **caractérisé par** l'étape de procédé suivante consistant à :
- installer le dispositif de montage (1) sur la machine à combustion interne à l'aide de la poignée de montage (6) avant le montage.
